# EUROPEAN PATENT SPECIFICATION

(11) **EP 3 485 400 B1**
(45) Date of publication and mention of the grant of the patent: **01.12.2021**
(21) Application number: 17835911.3
(22) Date of filing: 28.12.2017
(51) Int. Cl.: G06F 16/957

(54) **METHODS AND SYSTEMS FOR SERVER-SIDE RENDERING OF NATIVE CONTENT FOR PRESENTATION**
VERFAHREN UND SYSTEME ZUR SERVERSEITIGEN DARSTELLUNG VON NATIVEN INHALTEN ZUR PRÄSENTATION
PROCÉDÉS ET SYSTÈMES DE RENDU, CÔTÉ SERVEUR, D'UN CONTENU NATIF AUX FINS DE PRÉSENTATION

(30) Priority: 30.12.2016 US 201662440748 P; 25.01.2017 US 201715415322
(43) Date of publication of application: 22.05.2019
(73) Proprietor: Google LLC, Mountain View, CA 94043 (US)
(72) Inventor: BENDER, John, Mountain View California 94043 (US); ZHU, Zutao, Mountain View California 94043 (US); LIN, Bo, Mountain View California 94043 (US)
(74) Representative: Smith, Jeremy Robert
(86) International application number: PCT/US2017/068736
(87) International publication number: WO 2018/126023

(56) References cited:
- US-A1- 2009 063 619
- US-A1- 2014 075 275
- US-A1- 2016 344 831
- US-B1- 9 442 912

## Description

### CROSS-REFERENCE TO PRIORITY APPLICATIONS

This application claims the benefit of and priority to U.S. Provisional Application No. 62/440,748, filed on December 30, 2016, and U.S. Patent Application No. 15/415,322, filed on January 25, 2017.

### BACKGROUND

In a computer networked environment such as the internet, data from a server can be delivered to a client device responsive to a request for content. The client device receives the data from the server. The data can include instructions for rendering content corresponding to the data for display at the client device. Client devices can include a content rendering application or functionality for rendering the content and displaying the rendered content via a display component of or coupled to the client device.

US2009/063619 describes generating module output data by merging user configuration data with a retrieved module view definition

### SUMMARY

According to first and second aspects of the present invention there is provided a method and a system for server-side rendering of native content as defined in claims 1 and 9. According to various implementations there is provided a method for server-side rendering of native content for presentation within an environment of an application. The method includes receiving, by a data processing system, from a client device, a request for content including a content slot identifier identifying a particular content slot provided by a resource (such as a resource which is being used by an application to generate a display for the user). The method further includes accessing, by the data processing system using the content slot identifier, a database to identify a presentation schema used to arrange content components to generate rendered content files according to a specific configuration for display within an environment of the resource (that is, the environment of the application when the application is using the resource to generate the display for the user). The method further includes identifying, by the data processing system, responsive to the request for content, a content asset including a plurality of content components. The method further includes rendering, by a content renderer of the data processing system, as a rendered content file, the plurality of content components based on the presentation schema corresponding to the content slot. The method further includes transmitting, by the data processing system, the rendered content file to the client device for display within the content slot of the resource. The term "native content" is used here to mean content which is not part of, or generated by, the resource, and which is typically not associated with the resource in advance of the method being performed, but which, by means of the method, is displayed together with content which is part of, or generated, by the resource.

In some implementations, the request for content includes a size value of the requested content. In some implementations, identifying the presentation schema includes identifying, by the data processing system, a plurality of presentation schemas, each of the presentation schemas including a respective presentation schema identifier corresponding to the content slot identifier; identifying, by the data processing system, a subset of the plurality of presentation schemas, each of the presentation schemas included in the subset including a size attribute matching the size value of the requested content; and selecting, by the data processing system, the identified presentation schema from the subset of the plurality of presentation schemas.

In some implementations, the rendered content file includes a script configured to transmit, responsive to an interaction with the rendered content file, an indication of an interaction with the rendered content file at the client device. In some implementations, the method further includes inserting, by the data processing system, an address of a server to which the indication of the interaction is transmitted from the client device.

In some implementations, the rendered content file includes a HyperText Markup Language (HTML) script configured to display the rendered content file at the client device. In some implementations, the rendered content file includes a Cascading Style Sheets (CSS) script configured to display the rendered content file at the client device. In some implementations, the presentation schema includes a plurality of style parameters, each of the style parameters including a value matching a value of the resource of the entity. In some implementations, the style parameters include a section category to be displayed in the content slot, a background color of the content slot, a font size of text, a position of the text, or a position of an image. In some implementations, visual characteristics of the rendered content file substantially match visual characteristics of the environment of the application.

According to various implementations, there is provided a system for server-side rendering of native content for presentation within an environment of an application. The system includes a processor. The system further includes a memory coupled to the processor, the memory storing computer-executable instructions, which when executed by the processor, cause the processor to receive, from a client device, a request for content including a content slot identifier identifying a particular content slot provided by a resource; access, using the content slot identifier, a database to identify a presentation schema used to arrange content components to generate rendered content files according to a specific configuration for display within an environment of the resource; identify, responsive to the request for content, a content asset including a plurality of content components; render, as a rendered content file, the plurality of content components based on the presentation schema corresponding to the content slot; and transmit the rendered content file to the client device for display within the content slot of the resource.

In some implementations, the request for content includes a size value of the requested content. In some implementations, in identifying the presentation schema, the memory stores the computer-executable instructions, which when executed by the processor, further cause the processor to identify a plurality of presentation schemas, each of the presentation schemas including a respective presentation schema identifier corresponding to the content slot identifier; identify a subset of the plurality of presentation schemas, each of the presentation schemas included in the subset including a size attribute matching the size value of the requested content; and select the identified presentation schema from the subset of the plurality of presentation schemas.

In some implementations, the rendered content file includes a script configured to transmit, responsive to an interaction with the rendered content file, an indication of an interaction with the rendered content file at the client device. In some implementations, the memory stores the computer-executable instructions, which when executed by the processor, further cause the processor to insert an address of a server to which the indication of the interaction is transmitted from the client device.

In some implementations, the rendered content file includes a HyperText Markup Language (HTML) script configured to display the rendered content file at the client device. In some implementations, the rendered content file includes a Cascading Style Sheets (CSS) script configured to display the rendered content file at the client device.

In some implementations, the presentation schema includes a plurality of style parameters, each of the style parameters including a value matching a value of the resource of the entity. In some implementations, the style parameters include a section category to be displayed in the content slot, a background color of the content slot, a font size of text, a position of the text, or a position of an image. In some implementations, visual characteristics of the rendered content file substantially can match visual characteristics of the environment of the application.

In each of the aspects content may be selected for display. The selected content may be transmitted to a computer associated with a user for display as part of a user interface. The content may take any convenient form, and may for example be components of an interactive graphical user interface. It will be appreciated that aspects can be implemented in any convenient form. For example, aspects may be implemented by appropriate computer programs which may be carried on appropriate carrier media which may be tangible carrier media (e.g. disks) or intangible carrier media (e.g. communications signals). Aspects may also be implemented using suitable apparatus which may take the form of programmable computers running computer programs arranged to implement aspects. Aspects may be combined and features described in the context of one aspect may be combined with features of other aspects.

These and other aspects and implementations are discussed in detail below. The foregoing information and the following detailed description include illustrative implementations of various aspects, and provide an overview or framework for understanding the nature and character of the claimed aspects and implementations. The drawings provide illustration and a further understanding of the various aspects and implementations, and are incorporated in and constitute a part of this specification.

### BRIEF DESCRIPTION OF THE DRAWINGS

The accompanying drawings are not intended to be drawn to scale. Like reference numbers and designations in the various drawings indicate like elements. For purposes of clarity, not every component may be labeled in every drawing. In the drawings:
FIG. 1 is a block diagram depicting an environment for server-side rendering of native content according to illustrative implementations;
FIG. 2 is a block diagram depicting a content rendering module according to illustrative implementations;
FIG. 3 is a block diagram depicting a data model used by a content rendering module according to illustrative implementations;
FIG. 4A and FIG. 4B are block diagrams depicting sequences of rendering and transmitting content respectively according to a comparative example, and according to illustrative implementations of the present disclosure;
FIG. 5 is a flow diagram depicting a method for server-side rendering of native content according to illustrative implementations; and
FIG. 6 is a block diagram illustrating a general architecture for a computer system that may be employed to implement elements of the systems and methods described and illustrated herein, according to illustrative implementations.

### DETAILED DESCRIPTION

Following below are more detailed descriptions of various concepts related to, and implementations of, methods, apparatuses, and systems relating to server-side rendering of native content. The various concepts introduced above and discussed in greater detail below may be implemented in any of numerous ways, as the described concepts are not limited to any particular manner of implementation.

In particular, the present disclosure relates to systems and methods for rendering native content at a server and transmitting the rendered native content to a client device for display on a web or mobile application. In a comparative example, native content can be rendered by an application (e.g., a mobile application or a web browser) executing on a client device and presented for display within an environment of the application. In such implementations, a raw content asset including one or more content components are transmitted from a server to the client device, where the application at the client device utilizes specialized rendering tools, scripts, or instructions to assemble the content components of the raw content asset according to predetermined parameters of the application. Once the application renders the native content using the content components, the application presents the rendered native content for display within the environment of the application such that the rendered content appears to have the same look and feel as publisher-generated content.

There are several technical challenges with rendering native content by the application executing on the client device. First, the application requires one or more specialized content rendering scripts capable of causing the client device to properly render the native content. As a result of including the specialized content rendering scripts in the application, the size of the application is larger than an application that does not need the content rendering scripts to render the native content. The increased size of the application increases an amount of time it takes to download or transfer the application and also utilizes greater memory resources at the client device. Second, the application on the client device is required to receive updates to the computer-executable instructions as updates to the rendering process are made. These updates utilize network resources and often may render the application inoperable until the updates are performed. As a result, the application at the client device needs to repeatedly be updated, requiring both the consumption of network resources and client device resources, including computing resources and battery or power resources. Third, causing the client device to execute the computer-executable instructions to render the content at the client device can result in increased battery consumption as well as requiring additional computing resources that may adversely affect the performance of the client device. Fourth, by performing the rendering at the client device, the rendering operations may be limited to accommodate the reduced availability of computing resources on each client device. Fifth, by performing rendering at client devices, content publishers may lose the ability to create and manage A/B experiments or optimize rendering (e.g., the content publishers may have to manually establish A/B experiments or incorporate such a mechanism in their applications at the client devices).

To address these technical challenges and others, the present disclosure relates to rendering native content for an application at a server and transmitting the rendered native content to an application executing on a client device for rendering. Native content can include, for example, content having a similar form and function as primary content of the application, in which the native content is inserted. For example, a method for server-side rendering of native content for presentation within an environment of an application includes receiving, by a data processing system, from a client device, a request for content including a content slot identifier identifying a particular content slot provided by a resource. The content slot identifier can be used by the server to determine a presentation schema according to which to assemble, arrange, style and/or present a content item within the content slot identified by the content slot identifier. Characteristics of the content item can substantially match characteristics of other content included in the application (e.g., font, text size, background color or pattern, etc).

The method further includes accessing, by the data processing system using the content slot identifier, a database to identify a presentation schema used to arrange content components to generate rendered content files according to a specific configuration for display within an environment of the resource. The method further includes identifying, by the data processing system, responsive to the request for content, a content asset including a plurality of content components. The method further includes rendering, by a content renderer of the data processing system, as a rendered content file, the plurality of content components based on the presentation schema corresponding to the content slot. The method further includes transmitting, by the data processing system, the rendered content file to the client device for display within the content slot of the resource.

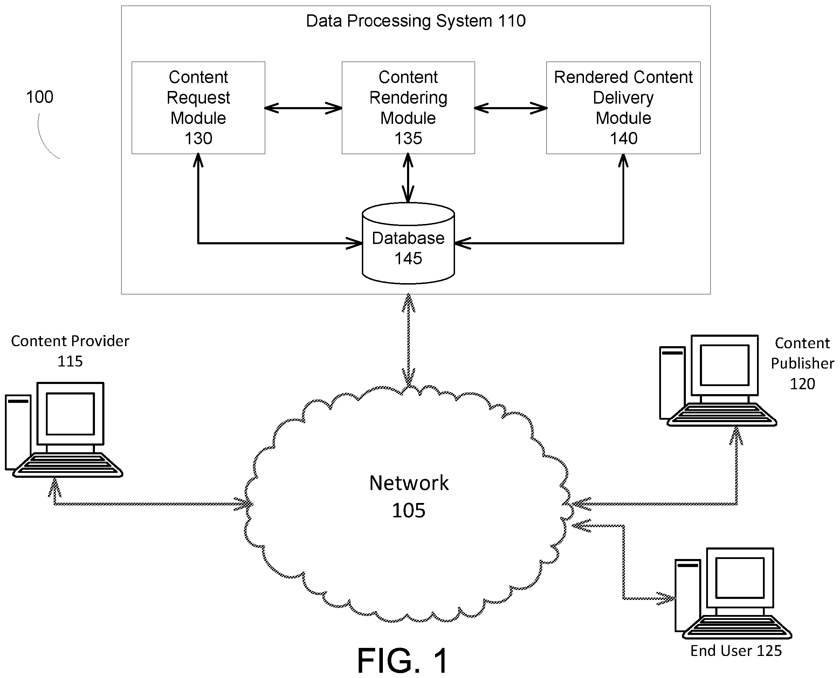

FIG. 1 illustrates a system 100 for server-side rendering of content for presentation via at least one computer network, such as the network 105. The network 105 can include computer networks such as the internet, local, wide, metro or other area networks, intranets, satellite networks, other computer networks such as voice or data mobile phone communication networks, and combinations thereof. The system 100 can also include at least one data processing system 110, e.g., at least one logic device such as a computing device or server having a processor to communicate via the network 105, for instance with at least one content provider computing device 115, at least one content publisher computing device 120, or at least one end user computing device or client device 125.

The data processing system 110 can include at least one server. For instance, the data processing system 110 can include a plurality of servers located in at least one data center or server farm. In some implementations, the data processing system 110 includes a content placement system. The data processing system 110 can include at least one content request module 130, at least one content rendering module 135, at least one rendered content delivery module 140, and at least one database 145. The content request module 130, the content rendering module 135, and the rendered content delivery module 140 can each include at least one processing unit, server, virtual server, circuit, engine, agent, appliance, or other logic device such as programmable logic arrays configured to communicate with the database 145 and with other computing devices (e.g., the content provider computing device 115, the content publisher computing device 120, or the end user computing device 125) via the network 105.

The content request module 130, the content rendering module 135, and the rendered content delivery module 140 can include or execute at least one computer program or at least one script. The content request module 130, the content rendering module 135, and the rendered content delivery module 140 can be separate components, a single component, or part of the data processing system 110. The content request module 130, the content rendering module 135, and the rendered content delivery module 140 can include combinations of software and hardware, such as one or more processors configured to execute one or more scripts to obtain requests to initiate a content item placement, identify information resources of the content publisher computing device 120, provide a rendering of the information resource at the content provider computing device 115, identify content item slots of the information resource, provide content items for display in the rendering of the information resource, or receive authorization to provide content items for display with the information resource at the end user computing device 125, for instance.

The content provider computing devices 115 can include servers or other computing devices operated by a content provider entity to provide content items such as content for display on information resources at the end user computing device 125. The content provided by the content provider computing device 115 can include third party content items for display on information resources such as a website or web page that includes primary content, e.g. content provided by the content publisher computing device 120. The content items can also be displayed on a search results web page. For instance, the content provider computing device 115 can provide or be the source of content items for display in content slots of content web pages such as a web page of a company where the primary content of the web page is provided by the company, for display on a search results landing page provided by a search engine, or for display in a mobile application at a mobile device. The content items associated with the content provider computing device 115 can be displayed on information resources other than web pages, such as content displayed as part of the execution of an application on a smartphone or other end user computing device 125.

The content publisher computing devices 120 can include servers or other computing devices operated by a content publishing entity to provide primary content for display via the network 105. For instance, the content publisher computing device 120 can include a web page operator who provides primary content for display on the web page. The primary content can include content other than that provided by the content publisher computing device 120, and the web page can include content slots configured for the display of third party content items from the content provider computing devices 115. For instance, the content publisher computing device 120 can operate the website of a company and can provide content about that company for display on web pages of the website. The web pages can include content slots configured for the display of third party content items such as content of the content provider computing device 115. In some implementations, the content publisher computing device 120 includes a search engine computing device (e.g. server) of a search engine operator that operates a search engine website. The primary content of search engine web pages (e.g., a results or landing web page) can include results of a search as well as third party content items displayed in content slots such as content items from the content provider computing device 115.

The end user computing devices 125 are client device that can include computing devices configured to communicate via the network 105 to display data such as the content provided by the content publisher computing device 120 (e.g., primary web page content or other information resources) and the content provided by the content provider computing device 115 (e.g., third party content items configured for display in a content slot of a web page). The end user computing device 125, the content provider computing device 115, and the content publisher computing device 120 can include desktop computers, laptop computers, tablet computers, smartphones, personal digital assistants, mobile devices, end user computing devices, consumer computing devices, servers, clients, and other computing devices. The end user computing device 125, the content provider computing device 115, and the content publisher computing device 120 can include user interfaces such as microphones, speakers, touchscreens, keyboards, pointing devices, a computer mouse, touchpad, or other input or output interfaces.

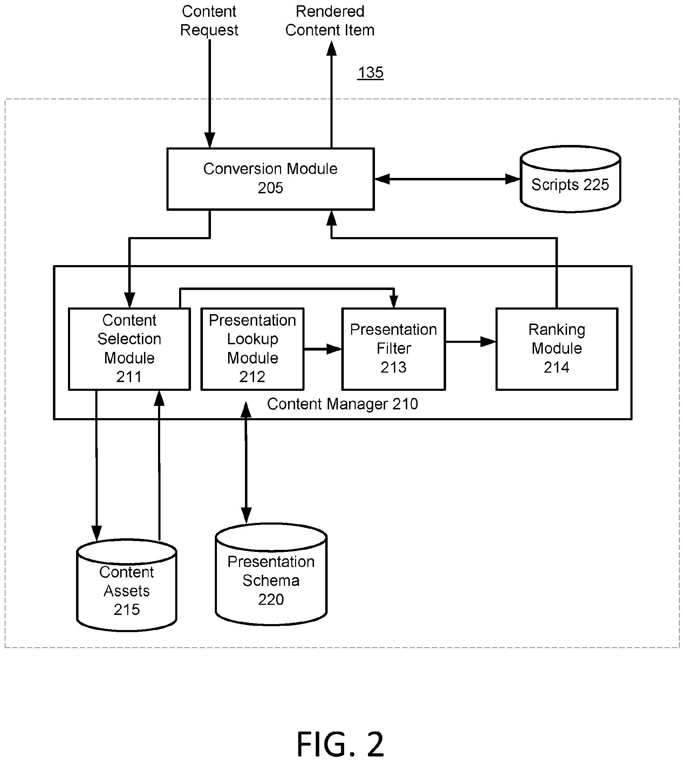

The content request module 130 can receive a request for content from the end user computing device 125. The request for content can include a request for an information resource, a request for one or more third-party content items, or a combination thereof. In some implementations, the request for content can include a request for third-party content. In some implementations, the request for third-party content can include an address or identifier of an information resource on which the third-party content is to be displayed. The request for third-party content can also include or identify one or more parameters that can be used by the data processing system 110 to determine the content to provide in response to the request for content. For example, the parameters can identify a size of a content slot within which to insert the requested content. The parameters can identify a type of content associated with the information resource, a type of third-party content requested (e.g., text, image, video, etc.), end user computing device information, size information for requested third-party content item, a network type associated with the end user computing device 125 (e.g., cellular network, WiFi, etc.), an application ID associated with an application at the end user computing device 125, attributes associated with the application ID, a current or past location of the end user computing device 125, or a combination thereof. Further disclosure regarding content requests is described below in connection with FIG. 2.

In some implementations, the request for content can include a request for an information resource. The request for an information resource can include an address or identifier of the information resource. For example, the request for the information resource can include a Uniform Resource Locator (URL) of a specific resource such as a webpage (e.g., "http://www.example.com"). The request for information resource can also include client device information (such as a device type, device identifier or a combination thereof).

The data processing system 110 can also include one or more content repositories or databases 145. The databases 145 can be local to the data processing system 110. In some implementations, the databases 145 can be remote to the data processing system 110 but can communicate with the data processing system 110 via the network 105. The databases 145 can include web pages, portions of webpages, third-party content items, and a prefetching script, among others, to serve to an end user computing device 125.

The content rendering module 135 can be configured to select a content item for rendering and delivery to an end user computing device 125. The content rendering module 135 can access the database 145 for selection of the content item. The content rendering module 135 can also access a presentation schema lookup database for selecting a presentation schema that dictates how the selected content item should be rendered. The content rendering module 135 can render the content item based on the selected content item and the selected presentation schema. The rendered content item can include a native content item to be displayed within a content slot of an information resource such that the rendered content item substantially matches visual characteristics of an environment of the information resource. Further discussion regarding the content rendering module 135 is found below in connection with FIG. 2.

The rendered content delivery module 140 can be configured to receive the content item that is rendered by the content rendering module 135. The rendered content delivery module 140 can deliver the rendered content to an end user computing device 125. In some implementations, the rendered content item includes an identifier that allows the rendered content delivery module 140 to determine a particular destination end user computing device 125 to transmit the rendered content item. The identifier can be received by the content request module 130 along with a request for content from the particular end user computing device 125.

The rendered content delivered by the rendered content delivery module 140 can be configured with an interaction script. In some implementations, the interaction script includes computer-executable instructions that cause the end user computing device 125 to transmit an indication of an interaction with the delivered content sent to the end user computing device 125 from the data processing system 110. For example, the interaction can include a click, swipe, tap, hover-over with a cursor, or any other interaction with a content item. The computer-executable instructions can include a script, such as HyperText Markup Language (HTML), Extensible HyperText Markup Language (XHTML), Extensible Markup Language (XML), Cascading Style Sheets (CSS), and JavaScript, among others. The computer-executable instructions can be executed within an application or web browser of the end user computing device 125, such as the application or web browser that caused the end user computing device 125 to transmit the content request received by the content request module 130. The application can include, for example, an Internet browser, a mobile application, a gaming application, a GPS application, a virtual reality application, or any other computer program capable of reading and executing the computer-executable instructions.

FIG. 2 is a block diagram depicting the content rendering module 135 according to illustrative implementations. The depicted components of the content rendering module 135 can include a portion of the content rendering module 135, and FIG. 2 may not depict all components of the content rendering module 135. In some implementations, the content rendering module 135 includes a conversion module 205, a content manager 210, a content asset database 215, a presentation schema database 220, and a script database 225.

In some implementations, the content asset database 215, the presentation schema database 220, and the script database 225 are all part of the database 145. The database 145 can be separated or partitioned to include the data stored by the content asset database 215, the presentation schema database 220, and the script database 225. In some implementations, the data processing system 110 can receive data from the content provider 115 and from the content publisher 120 and store the received data into the corresponding database 215, 220, 225. For example, the content provider 115 can transmit content asset data to the data processing system 110, and the data processing system 110 can load and store that information in the content asset database 215. Likewise, the content publisher 120 can transmit presentation schema data to the data processing system 110, which can be loaded and stored in the presentation schema database 220.

In some implementations, the conversion module 205 is configured to receive a content request, for example, from the content request module 130. In some implementations, the conversion module 205 can be a part of the content request module 130. The conversion module 205 can be configured to receive a content request in a Hypertext Transfer Protocol (HTTP) format. The content request can be received from an application (e.g., from a mobile end user computing device 125) or from a webpage. The HTTP content request is initially sent from the end user computing device 125.

In some implementations, the HTTP content request includes a content slot identifier and size information of the requested content item. The content slot identifier can include an identifier that identifies a portion of an information resource that is to be supplied with the requested content item, such as, for example, a content slot identifier that identifies a content slot of the information resource. The size information can include one set of size dimensions or multiple sets of size dimensions. In some implementations, the size information is a fixed size (e.g., a pixel by pixel size dimension). In some implementations, the size information designates whether the requested size is adaptive, such that the returned rendered content item is configured to fit in variously-sized content slots. In some implementations, the content request indicates a request for a native content item. In some implementations, the content request indicates a request for a non-native content item. In some implementations, the content request does not designate whether the request is for a native or non-native content item.

Upon receiving the HTTP content request, the conversion module 205 can be configured to convert the HTTP request into a format compatible with the content manager 210. For example, the conversion module 205 can be configured to parse the HTTP content request to include additional contextual information for use by the content manager 210 (e.g., information such as an application identifier of the application that sent the content request, a user identifier of a user of the application, or the like). In addition, the conversion module 205 can format the HTTP content request such that the formatted request can be one that the content manager 210 can parse through and extract information from for use in content selection. For example, the content manager 210 can parse the content request formatted or modified by the conversion module 205 to be able to extract identifiers from the content request and retrieve content relevant to the extracted identifiers.

In some implementations, the content manager 210 is a module that is configured to select a presentation schema that is compatible with the content slot identified by the content slot identifier and the provided size information. Accordingly, in some implementations, the content manager 210 selects a list of content assets based on the content slot identifier, selects a list of presentation schemas assigned to or otherwise associated with the content slot, and filters out content assets that do not include corresponding presentation schemas matching the size information and those that are not targeted to the identified content slot by the content slot identifier. The content manager 210 can include a content selection module 211, a presentation lookup module 212, a presentation filter 213, and a ranking module 214.

In some implementations, the content selection module 211 can receive the content request including the content slot identifier and the size information. The content selection module 211 can access the content asset database 215 for selecting a list of native content assets responsive to the content request. In some implementations, a content provider of a content asset can assign or link the particular content asset to one or more content asset templates, and the content asset template(s) can include a specification according to which content components of the content asset can be arranged. The content components can include, but are not limited to, a headline, an image, a body, a call to action, a logo, an attribution, a click through URL, or the like.

In some implementations, the content selection module 211 can use a query to identify content assets from the content asset database 215. The query can include the content slot identifier and the size information from the content request. In response to the query, the content asset database 215 can be accessed by the content selection module 211 to retrieve one or more content assets matching the content slot identifier and the size information. In some implementations, the content asset database 215 stores a plurality of content assets and links or otherwise associates each of the content assets with a content slot identifier. In some implementations, the content asset database 215 can match, map, or link content assets assigned to a particular content asset template that is compatible with a presentation schema assigned to a content slot. The content asset database 215 can further receive (e.g., from the content provider 115) sizing information of content assets and map each of the content assets stored in the content asset database 215 with the sizing information. As such, the content selection module 211 can perform a lookup at the content asset database 215 based on the requested content slot identifier and the size information, and retrieve corresponding content assets.

The returned native content assets can each include a content asset template identifier that can be used to identify presentation schemas, as discussed below. In some implementations, each of the retrieved native content assets can include or exclude a flag or other indicator indicating whether or not any presentation schemas are assigned to or otherwise associated with the native content asset (e.g., whether presentation schemas are assigned to or otherwise associated with the content asset template identifier). For example, if one of the matching content assets includes a flag indicating that there are no presentation schemas assigned to or otherwise associated with the content asset, the content asset database 215 can exclude the flagged native content asset from being returned to the content selection module 211. Accordingly, the content asset database 215 can return native content assets (e.g., those that are unflagged), and can exclude native content assets that are flagged as not being assigned to or otherwise associated with any presentation schemas. In some implementations, the content selection module 211 transmits the returned content assets including the corresponding content asset template identifiers to the presentation filter module 213.

In some implementations, the presentation lookup module 212 receives the content request including the content slot identifier and the sizing information. The presentation lookup module 212 can identify all eligible presentation schemas assigned to or otherwise associated with the content slot identifier included in the content request by accessing the presentation schema database 220. In some implementations, the presentation schema database 220 stores a plurality of presentation schemas and associates each of the presentation schemas with a content slot identifier. As such, the presentation lookup module 212 can perform a lookup at the presentation schema database 220 based on the requested content slot identifier, and can retrieve corresponding presentation schemas. The presentation lookup module 212 can filter out presentations retrieved from the presentation schema database 220 that fail to match the sizing information included in the content request. In some implementations, if the sizing information includes a plurality of different sizes, the presentation lookup module 212 filters out those presentation schemas that fail to match any of the sizes included in the content request. The presentation lookup module 212 can further dedupe presentation schemas that have the same size and that belong to the same content asset template. Accordingly, the presentation lookup module 212 can return a presentation schema mapping that maps a content asset template to a list of eligible presentation schemas assigned to or otherwise associated with the content asset template.

For example, in creating a presentation schema mapping, the presentation lookup module 212 can create a template map for identifying presentation schemas corresponding to content asset template identifiers as follows:
Content_asset_template_id => Presentation_schema

The above mapping illustrates that one or more presentation schemas are mapped to a content asset template identifier. In filling out the mapping template, the presentation lookup module 212 can retrieve a list of sizes included in the content request (e.g., the list can include one size or multiple sizes). The presentation lookup module 212 can retrieve the content slot identifier from the content request, and retrieve all presentation schemas assigned to or otherwise associated with the content slot identifier from the presentation database 220. In some implementations, for each presentation schema, if a content asset template identifier assigned to or otherwise associated with a presentation schema already exists in the presentation schema mapping, the presentation lookup module 212 can ignore the already existing presentation schema. In addition, if a presentation schema does not have any of the sizes included in the content request, the presentation lookup module 212 can ignore the presentation schema. Otherwise, the presentation lookup module 212 can add a new entry to the mapping. Once completed, the presentation lookup module 212 can transmit the presentation schema mapping to the presentation filter 213.

In some implementations, the presentation filter 213 receives the presentation schema mapping from the presentation lookup module 212 and the eligible content assets from the content selection module 211, and filters out those content assets that do not correspond to the presentation schema mapping. For example, the presentation filter 213 can identify the eligible content asset templates that correspond to the eligible presentation schemas by the presentation schema mapping. The presentation filter 213 can then exclude those content assets including content asset template identifiers that do not match the determined eligible content asset templates. In other words, the presentation filter 213 can filter out those content assets whose content asset templates do not belong in the presentation schema mapping (e.g., those content assets that do not have eligible presentation schemas assigned to or otherwise associated with the requested content slot). The presentation filter 213 can send the filtered list of content assets to the ranking module 214.

In some implementations, the ranking module 214 performs a selection of one of the content assets from the list of content assets. If the selected content asset is assigned to or otherwise associated with more than one presentation schema, as determined based on the presentation schema mapping, the ranking module 214 can randomly select one of the presentation schemas assigned to or otherwise associated with the selected content asset. As such, after selecting a presentation schema, the ranking module 214 can transmit an identifier assigned to or otherwise associated with the selected content asset and an identifier assigned to or otherwise associated with the selected presentation schema of the selected content asset to the conversion module 205 as a content response that is responsive to the initial content request received by the conversion module 205.

In some implementations, the conversion module 205 receives the identifiers of the selected content asset (e.g., the content asset template identifier) and the selected presentation schema of the selected content asset from the ranking module 214. The conversion module 205 can access the script database 225 to retrieve presentation schema and content components corresponding to the selected presentation schema identifier and the selected content asset. The presentation schema can include one or more of HTML code, CSS code or other computer-executable instructions that can modify or influence a presentation of a content item. In some implementations, the scripts database 225 stores various presentation schemas, each of which can be assigned to or have a presentation schema identifier. The content asset database 215 can further assign each of the presentation schemas to one or more content asset template identifiers. As such, the conversion module 205 can perform a lookup in the script database 225 based on the presentation schema identifier and/or the content asset template identifier, and retrieve the corresponding presentation schemas.

In some implementations, the conversion module 205 can render a content item based on the received presentation schema and content components. The conversion module 205 can send the rendered content item to the rendered content delivery module 140. For an adaptive-sized content request that causes the content rendering module 135 to return an adaptive content item, the client device 125 can be configured to adjust the adaptive content item by filling in 100% of a width of a content item slot with the rendered content item, and then sizing a height of the content item to include values of a selected content asset.

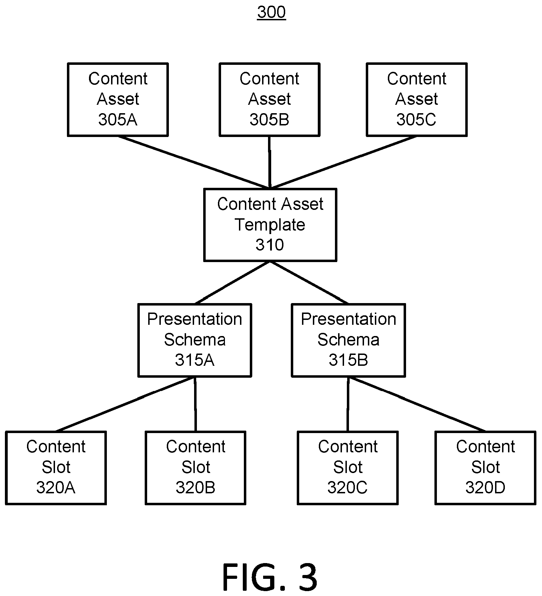

FIG. 3 is a block diagram depicting a data model 300 illustrating the links between content assets, content asset templates, presentation schemas, and content slots used by the content rendering module 135 according to illustrative implementations. The data model 300 can include one or more content assets 305A, 305B, 305C and a content asset template 310 linked to each of the content assets 305A, 305B, 305C. In addition, one or more presentation schemas 315A, 315B can be linked to the content asset template 310. Furthermore, one or more content slots 320A, 320B, 320C, and 320D can be linked to each of the presentation schemas 315A, 315B. In some implementations, the content asset template 310 can define a set of content components, the content assets 305A, 305B, 305C can define values of those content components, and the presentation schemas 315A, 315B can define a look and feel of a rendered content item using the content components.

Content publishers may desire to provide content items generated from content assets for display on resources. Content publishers may assign or otherwise associate one or more content assets with a content asset template used to generate content items for display using the content components of the content assets. As described above, the content assets can include a plurality of content components that are arranged together to generate the content item. A content asset template can be used to determine the manner in which content components of the content asset are to form or generate the content item. In some implementations, the content asset template can include instructions according to which the content components can be arranged. The content items generated from the content asset can be displayed in one or more content slots. These content slots can be included in information resources of content publishers. Content publishers can assign or otherwise associate one or more presentation schemas to each of the content slots. When a content asset is selected for displaying a content item in a particular content slot, the content rendering module 135 can utilize the content asset template to arrange the content components of the content asset in a particular manner, and can further utilize one of the presentation schemas assigned or otherwise linked to the content slot and to the content asset template to update one or more fields with values from the presentation schema. For instance, if the presentation schema includes a color value of blue for the background, the content rendering module 135 can render the content item by assigning the color blue to the value corresponding to the background color for the content item, and in this way the content item is displayed with a blue background.

In some implementations, the content assets 305A, 305B, 305C can each include a plurality of values that are defined, for example, by the content provider 115. In addition, the content asset template 310 can include a plurality of fields that can be assigned to or otherwise associated with content provider-defined values of each of the content assets 305A, 305B, 305C. The content components can include, but are not limited to, headline, image, body text, call to action, logo, attribution, click through URL, or the like. For example, the content asset 305A can include different content components with respect to the content asset fields defined by the content asset template 310 from the content components defined by the content assets 305B and 305C (e.g., the "headline" content component of content asset 305A can be different from the "headline" content component of content assets 305B and 305C). In some implementations, the content assets 305A, 305B, 305C are each assigned to or otherwise associated with a different content provider 115.

In some implementations, the content assets 305A, 305B, 305C are stored in the content asset database 215. Each of the content assets 305A, 305B, 305C stored in the content asset database 215 can be linked to the content asset template 310 so that the content asset template 310 can readily be identified based on the content assets 305A, 305B, 305C. For example, the content asset template can be assigned to or otherwise associated with a unique identifier, and each of the content assets 305A, 305B, 305C can include or can point to the unique identifier of the content asset template 310.

In some implementations, the presentation schemas 315A, 315B can be stored in the presentation schemas database 220. The presentation schemas 315A, 315B stored in the presentation schema database 220 can be linked by the content asset template 310 so that the presentation schemas 315A, 315B can readily be identified based on the content asset template 310. For example, the presentation schemas 315A, 315B can each be assigned to or otherwise associated with a unique identifier, and the content asset template 310 can include or can point to the unique identifiers of the presentation schemas 315A, 315B.

In addition, each of the presentation schemas 315A, 315B can be assigned to or otherwise associated with one or more content slots. For example, the presentation schema 315A can be assigned to or otherwise associated with the content slots 320A and 320B, and the presentation schema 315B can be assigned to or otherwise associated with the content slots 320C and 320D. In some implementations, each of the content slots 320A, 320B, 320C, and 320D can include a unique identifier, and each of the presentation schemas 315A and 315B stored in the presentation schema database 220 can include or otherwise be assigned to or otherwise associated with the respective unique identifiers of the content slots 320A, 320B, 320C, and 320D. Accordingly, each of the presentation schemas 315A, 315B can be assigned to or otherwise associated with or targeted to a particular content slot of an information resource (e.g., a content item slot of an information resource).

In some implementations, the presentation schemas 315A, 315B are configured by one or more content publishers 120. For example, the presentation schemas 315A, 315B can each be assigned to or otherwise associated with and configured by a single content publisher 120, and each of the presentation schemas 315A, 315B can be targeted to different information resources of the content publisher, different content slots on a same information resource of the content publisher 120, different areas of a website or an application of the content publisher, or the like. As an example, the presentation schema 315A can be targeted to a homepage feed content slot of the content publisher 120 and the presentation schema 315B can be targeted to a category page rail content slot of the content publisher 120.

As such, the presentation schemas 315A, 315B can represent publisher-configured structures and styles of native content items. In other words, the presentation schemas 315A, 315B may not depend on and are not influenced by a particular content asset (e.g., content assets 305A, 305B, 305C) or content provider (e.g., content provider 115), as the presentation schemas 315A, 315B can include specifications for how native content items should appear in a given section of an application or website of the content publisher 120. Accordingly, the content publisher 120 can configure a particular presentation schema with attributes such as, but not limited to, a background color, a font size, a font type, a font color, locations within a content item slot, and so on. These configurations are entered and stored in the presentation schema database 220 as presentation schemas.

As discussed above, the presentation schemas can be configured to include an assigned size. For example, the presentation schema 315A can include a first size and the presentation schema 315B can include a second size. The first size can include a fixed size in a pixel dimension form (e.g., 300 pixels x 500 pixels). The second size can include an adaptive size indicator. The adaptive size indicator can indicate that the presentation schema 315B can be compatible with adaptive content slots (e.g., adaptive content item slots) that do not have a fixed size. For adaptive content item slots and corresponding adaptive presentation schemas, the client device 125 can be configured to render the adaptive content item by filling in 100% of a width of a content item slot with the rendered content item, and then sizing a height of the content item to include values of a selected content asset. Accordingly, the presentation schemas 315A and 315B are adapters that can convert native content assets (e.g., content assets 305A, 305B, and 305C) into rendered content items of a particular size.

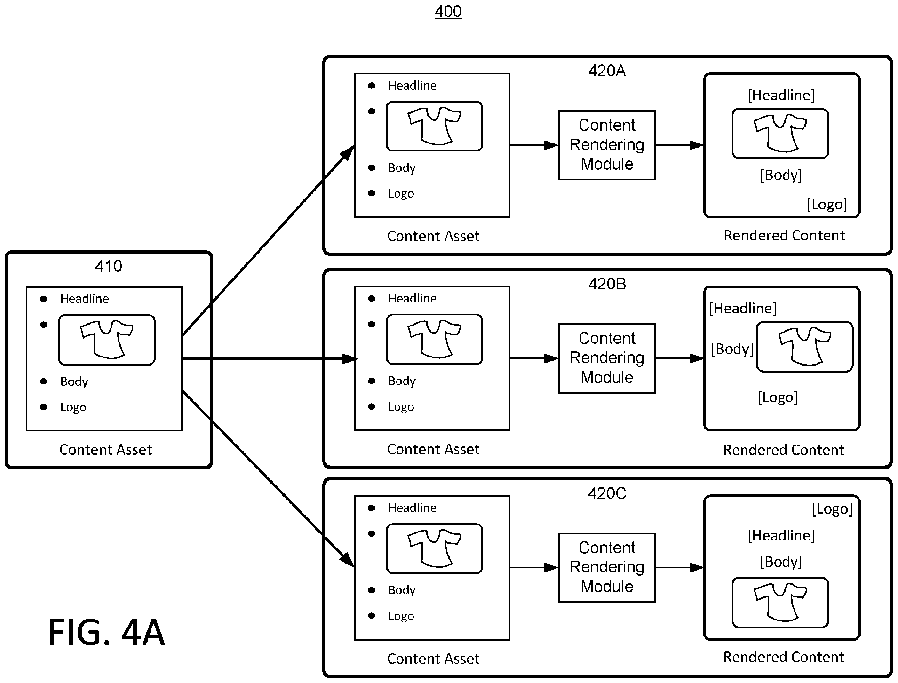

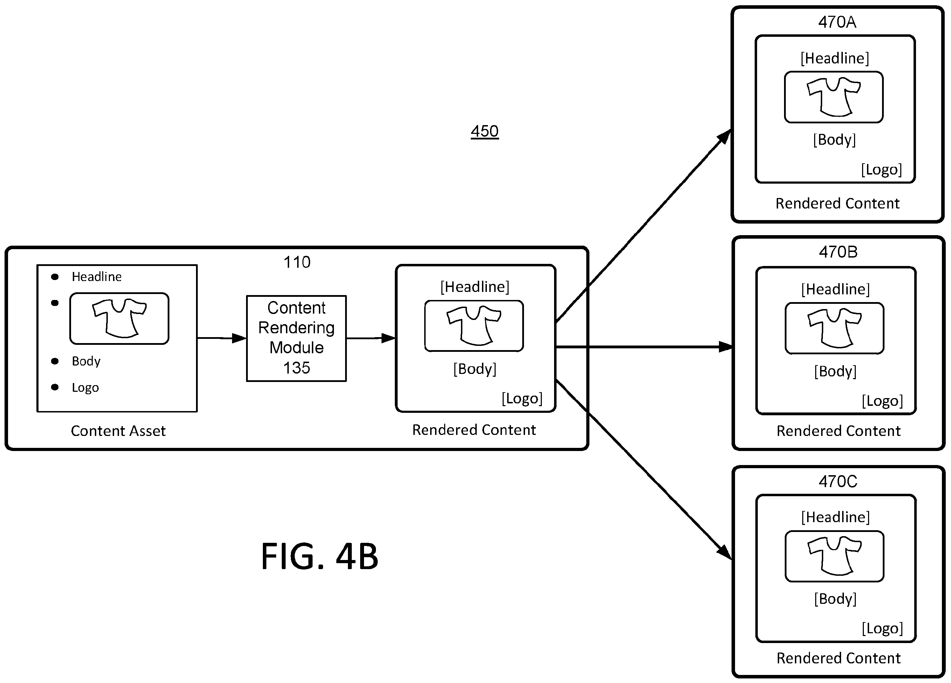

FIG. 4A is a block diagram 400 depicting sequences of rendering and transmitting content according to a comparative example. FIG. 4B is a block diagram 450 depicting sequences of rendering and transmitting content according to illustrative implementations of the present disclosure.

Referring to FIG. 4A, the block diagram 400 illustrates a data processing system 410 transmitting content components (e.g., content asset values provided to the data processing system 410 by the content provider 115) to a plurality of client devices 420A, 420B, 420C. The data processing system 410 can be similar to the data processing system 110 as described above, except that the data processing system 410 does not include the content rendering module 135. The client devices 420A, 420B, 420C can be similar to the end user computing device 125 as described above. Because the data processing system 410 does not include the content rendering module 135, each of the client devices 420A, 420B, 420C includes a content rendering module for rendering native content items.

The content components stored at the data processing system 410 can include values for one or more fields, such as, but not limited to, a headline, body text, an image, and a logo. The data processing system 410 transmits the content components to each of the client devices 420A, 420B, 420C. In response, the client devices 420A, 420B, 420C receive the content components, and the respective content rendering module at each of the client devices 420A, 420B, 420C is rendered to generate a rendered content item for display at each of the client devices 420A, 420B, 420C. Each of the content rendering modules of the client devices 420A, 420B, 420C may render the content assets in a different arrangement depending on a presentation schema selected during the content rendering process.

However, because rendering of the content is performed at each client device 420A, 420B, 420C, there are several technical challenges with native content being rendered by the application or webpage executing on the client device 420A, 420B, 420C. First, the application requires one or more specialized content rendering scripts capable of causing the client device to properly render the native content. As a result of including the specialized content rendering scripts in the application, the size of the application is larger than an application that does not need the content rendering scripts to render the native content. The increased size of the application increases an amount of time it takes to download or transfer the application and also utilizes greater memory resources at the client device. Second, the application on the client device is required to receive updates to the computer-executable instructions as updates to the rendering process are made. These updates utilize network resources and often may render the application inoperable until the updates are performed. As a result, the application at the client device needs to repeatedly be updated, requiring both the consumption of network resources and client device resources, including computing resources and battery or power resources. Third, causing the client device to execute the computer-executable instructions to render the content at the client device can result in increased battery consumption as well as requiring additional computing resources that may adversely affect the performance of the client device. Fourth, by performing the rendering at the client device, the rendering operations may be limited to accommodate the reduced availability of computing resources on each client device.

Referring now to FIG. 4B, the block diagram 450 illustrates a data processing system 110 transmitting rendered native content (e.g., content components provided to the data processing system 110 by the content provider 115) to a plurality of client devices 470A, 470B, 470C. The data processing system 110 includes the content rendering module 135 that renders native content as described above. The client devices 470A, 470B, 470C can be similar to the end user computing device 125 as described above. The client devices 470A, 470B, 470C can be running an application (e.g., on a mobile client device) or a website in a web browser. Because the data processing system 110 includes the content rendering module 135, each of the client devices 470A, 470B, 470C does not require and does not include a content rendering module for rendering native content items. Although not shown in FIG. 4B, the content rendering module 135 may render the content assets in a different arrangement depending on a presentation schema selected during the content rendering process such that a different presentation of the rendered content is selected for each of the client devices 470A, 470B, 470C.

Accordingly, because native content is rendered at the data processing system 410 such that a rendered content item can be transmitted to each of the client devices 470A, 470B, 470C without any rendering occurring at the client devices 470A, 470B, 470C, the above-enumerated technical challenges can be overcome. First, the application need not require one or more specialized content rendering scripts capable of causing the client device to properly render the native content because the client device does not perform the rendering, reducing the size of the application, decreasing an amount of time it takes to download or transfer the application, and also mitigating use of memory resources at the client device. Second, the application on the client device need not receive updates to the computer-executable instructions as updates to the rendering process are made, reducing utilization of network resources, thereby reducing instances that may render the application inoperable until the updates are performed. As a result, the application at the client device need not be repeatedly updated, reducing both the consumption of network resources and client device resources, including computing resources and battery or power resources. Third, the client device that receives rendered content from the data processing system 110 such that it doesn't need to render the content itself can result in reduced battery consumption as well as reduced computing resources. Fourth, by performing the rendering at the server, the rendering operations may be expanded to accommodate the increased availability of computing resources at the server. Fifth, by performing rendering at the server, content publishers may be able to create and manage A/B experiments or optimize rendering (e.g., the content publishers may not need to manually establish A/B experiments or incorporate such a mechanism in their applications at the client devices).

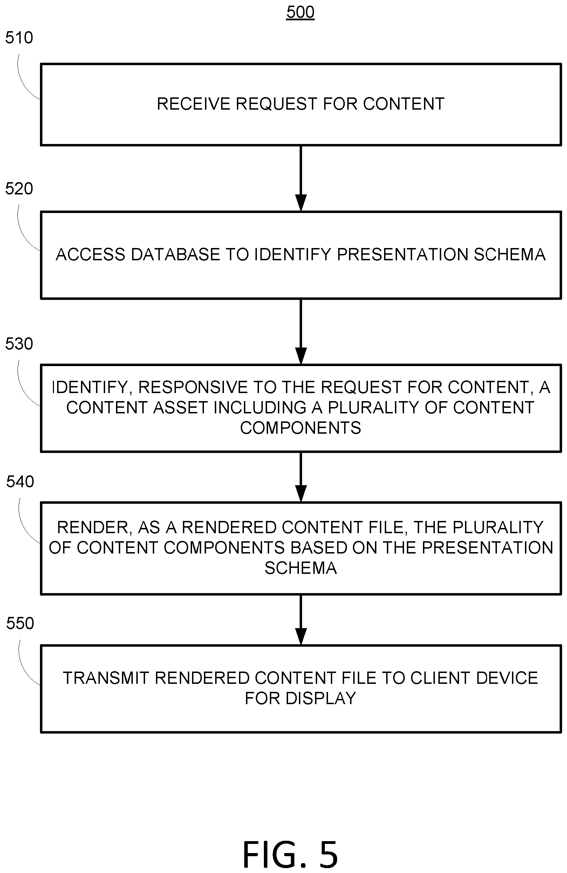

FIG. 5 is a flow diagram depicting a method 500 for server-side rendering of native content according to illustrative implementations. In brief overview, the method 400 can include receiving a request for content (BLOCK 510). The method can include accessing a database to identify a presentation schema (BLOCK 520). The method can include identifying, responsive to the request for content, a content asset including a plurality of content components (BLOCK 530). The method can include rendering, as a rendered content file, the plurality of content components based on the presentation schema (BLOCK 540). The method can include transmitting the rendered content file to a client device for display (BLOCK 550).

In further detail, the method 500 can include the data processing system 110 receiving a request for content (BLOCK 510). The content request can be in a Hypertext Transfer Protocol (HTTP) format. In some implementations, the content request can be in an HHTP/2 format, an SPDY format, or any other suitable networking protocol for transferring content. The content request can be received from an application (e.g., from a mobile end user computing device) or from a webpage. The content request can be initially sent from the end user computing device.

In some implementations, the content request includes a content slot identifier and size information of the requested content item. The content slot identifier can include an identifier that identifies a portion of an information resource that is to be supplied with the requested content item. The size information can include one set of size dimensions or multiple sets of size dimensions. In some implementations, the size information is a fixed size (e.g., a pixel by pixel size dimension). In some implementations, the size information designates whether the requested size is adaptive, such that the returned rendered content item is configured to fit in variously-sized content slots. In some implementations, the content request indicates a request for a native content item. In some implementations, the content request indicates a request for a non-native content item. In some implementations, the content request does not designate whether the request is for a native or non-native content item.

Upon receiving the content request, the method 500 can include the data processing system 110 converting the HTTP request into a format compatible with a content manager. For example, the method 500 can include the data processing system 110 parsing the HTTP content request to include additional contextual information for use by the content manager (e.g., information such as an application identifier of the application that sent the content request, a user identifier of a user of the application, or the like). In addition, the method 500 can include the data processing system 110 formatting the HTTP content request such that the formatted request can be one that the content manager can parse and extract information from for use in content selection. For example, the method 500 can include the data processing system 110 parsing the formatted or modified content request to be able to extract identifiers from the content request and retrieve content relevant to the extracted identifiers.

The method can include the data processing system 110 accessing a database to identify a presentation schema (BLOCK 520). The method 500 can include the data processing system 110 identifying all eligible presentation schemas assigned to or otherwise associated with the content slot identifier included in the content request by accessing a presentation schema database. In some implementations, the presentation schema database stores a plurality of presentation schemas and associates each of the presentation schemas with a content slot identifier. As such, the method 500 can include the data processing system 110 performing a lookup at the presentation schema database based on the requested content slot identifier, and retrieving corresponding presentation schemas. The method 500 can include the data processing system 110 filtering out presentation schemas retrieved from the presentation schema database that fail to match the sizing information included in the content request. In some implementations, if the sizing information includes a plurality of different sizes, the method 500 can include the data processing system 110 filtering out those presentation schemas that fail to match any of the sizes included in the content request. The method 500 can include the data processing system 110 deduping presentation schemas that have the same size and that belong to the same content asset template. Accordingly, the method 500 can include the data processing system 110 returning a presentation schema mapping that maps a content asset template to a list of eligible presentation schemas assigned to or otherwise associated with the content asset template.

For example, in creating a presentation schema mapping, the method 500 can include the data processing system 110 creating a template map for identifying presentation schemas corresponding to content asset template identifiers. The mapping can illustrate that one or more presentation schemas are mapped to a content asset template identifier. In filling out the mapping template, the method 500 can include the data processing system 110 retrieving a list of sizes included in the content request (e.g., the list can include one size or multiple sizes). The method 500 can include the data processing system 110 retrieving the content slot identifier from the content request, and retrieve all presentation schemas assigned to or otherwise associated with the content slot identifier from the presentation database. In some implementations, for each presentation schema, if a content asset template identifier assigned to or otherwise associated with a presentation schema already exists in the presentation schema mapping, the method 500 can include the data processing system 110 ignoring the already existing presentation schema. In addition, if a presentation schema does not have any of the sizes included in the content request, the method 500 can include the data processing system 110 ignoring the presentation schema. Otherwise, the method 500 can include the data processing system 110 adding a new entry to the mapping.

The method can include the data processing system 110 identifying, responsive to the request for content, a content asset including a plurality of content components (BLOCK 530). In some implementations, the method 500 can include the data processing system 110 receiving the content request including the content slot identifier and the size information. The method 500 can include the data processing system 110 accessing a content asset database for selecting a list of native content assets responsive to the content request. In some implementations, a content provider of a content asset can assign or link the particular content asset to one or more content asset templates, and the content asset template can include a specification according to which content components of the content asset can be arranged. The content components can include, but are not limited to, a headline, an image, a body, a call to action, a logo, an attribution, a click through URL, or the like.

In some implementations, the method 500 can include the data processing system 110 using a query to identify content assets from the content asset database. The query can include the content slot identifier and the size information from the content request. In response to the query, the method 500 can include accessing the content asset database to retrieve one or more content assets matching the content slot identifier and the size information. In some implementations, the content asset database stores a plurality of content assets and links or otherwise associates each of the content assets with a content slot identifier. In some implementations, the content asset database can match, map, or link content assets assigned to a particular content asset template that is compatible with a presentation schema assigned to a content slot. The presentation schema can be tagged or otherwise indicated to be compatible with a content asset template by receiving compatibility information of a particular presentation schema from a content publisher, and the compatibility information can be stored and mapped to corresponding compatible content asset templates within the content asset database (e.g., by utilizing cross-referencing identifiers or tags between a compatible presentation schema and a corresponding content asset template). The content asset database can further receive (e.g., from the content provider 115) sizing information of content assets and map each of the content assets stored in the content asset database with the sizing information. As such, the method 500 can include the data processing system 110 performing a lookup at the content asset database based on the requested content slot identifier and the size information, and retrieve corresponding content assets.

The returned native content assets can each include a content asset template identifier that can be used to identify presentation schemas. In some implementations, each of the retrieved native content assets can include or exclude a flag or other indicator indicating whether or not any presentation schemas are assigned to or otherwise associated with the native content asset (e.g., whether presentation schemas are assigned to or otherwise associated with the content asset template identifier). For example, if one of the matching content assets includes a flag indicating that there are no presentation schemas assigned to or otherwise associated with the content asset, the content asset database can exclude the flagged native content asset from being returned. Accordingly, the content asset database can return native content assets (e.g., those that are unflagged), and can exclude native content assets that are flagged as not being assigned to or otherwise associated with any presentation schemas.

The method 500 can include the data processing system 110 rendering, as a rendered content file, the plurality of content components based on the presentation schema (BLOCK 540). In some implementations, the method 500 can include the data processing system 110 receiving the identifiers of the selected content asset (e.g., the content asset template identifier) and the selected presentation schema of the selected content asset. The method 500 can include the data processing system 110 accessing a script database to retrieve presentation schema and content components corresponding to the selected presentation schema identifier and the selected content asset. The presentation schema can include one or more of HTML code, CSS code, or other computer-executable instructions that can modify or influence a presentation of a content item. In some implementations, the scripts database stores various presentation schemas, each of which can be assigned to or have a presentation schema identifier. The content asset database can further assign each of the presentation schemas to one or more content asset template identifiers. As such, the method 500 can include the data processing system 110 performing a lookup in the script database based on the presentation schema identifier and/or the content asset template identifier, and retrieve the corresponding presentation schemas.

In some implementations, the method 500 can include the data processing system 110 rendering a content item based on the received presentation schema and content components. For an adaptive-sized content request, a client device can adjust the adaptive content item by filling in 100% of a width of a content item slot with the rendered content item, and then sizing a height of the content item to include values of a selected content asset. The method can include the data processing system 110 transmitting the rendered content file to a client device for display (BLOCK 550).

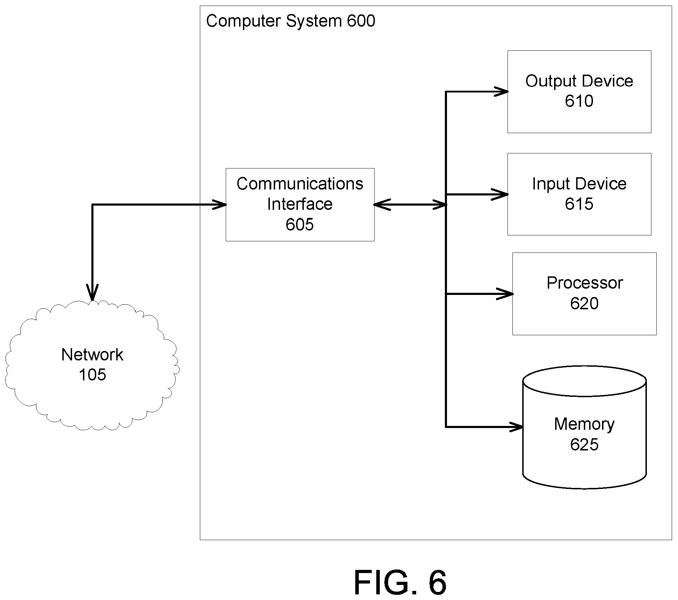

FIG. 6 is a block diagram illustrating a general architecture for a computer system 600 that may be employed to implement elements of the systems and methods described and illustrated herein (including the system 110 and its components such as the content request module 130, the content rendering module 135, and the rendered content delivery module 140 or the end user computing device 125) in accordance with some implementations. The computer system 600 can be used to provide information via the network 105 for display. The computer system 600 of FIG. 6 comprises one or more processors 620 communicatively coupled to memory 625, one or more communications interfaces 605, and one or more output devices 610 (e.g., one or more display units) and one or more input devices 615. The processors 620 can be included in the data processing system 110 or the other components of the system 110 such as the content request module 130, the content rendering module 135, and the rendered content delivery module 140.

In the computer system 600 of FIG. 6, the memory 625 may comprise any computer-readable storage media, and may store computer instructions such as processor-executable instructions for implementing the various functionalities described herein for respective systems, as well as any data relating thereto, generated thereby, or received via the communications interface(s) or input device(s) (if present). Referring again to the system 110 of FIG. 1, the data processing system 110 can include the memory 625 to store information related to the availability of inventory of one or more content units, reservations of one or more content units, among others. The memory 625 can include the database 145. The processor(s) 620 shown in FIG. 6 may be used to execute instructions stored in the memory 625 and, in so doing, also may read from or write to the memory various information processed and or generated pursuant to execution of the instructions.

The processor 620 of the computer system 600 shown in FIG. 6 also may be communicatively coupled to or control the communications interface(s) 605 to transmit or receive various information pursuant to execution of instructions. For example, the communications interface(s) 605 may be coupled to a wired or wireless network, bus, or other communication means and may therefore allow the computer system 600 to transmit information to or receive information from other devices (e.g., other computer systems). While not shown explicitly in the system of FIG. 1, one or more communications interfaces facilitate information flow between the components of the system 600. In some implementations, the communications interface(s) may be configured (e.g., via various hardware components or software components) to provide a website as an access portal to at least some aspects of the computer system 600. Examples of communications interfaces 605 include user interfaces (e.g., web pages), through which the user can communicate with the data processing system 110.

The output devices 610 of the computer system 600 shown in FIG. 6 may be provided, for example, to allow various information to be viewed or otherwise perceived in connection with execution of the instructions. The input device(s) 615 may be provided, for example, to allow a user to make manual adjustments, make selections, enter data, or interact in any of a variety of manners with the processor during execution of the instructions. Additional information relating to a general computer system architecture that may be employed for various systems discussed herein is provided further herein.

The subject matter and the operations described herein can be implemented in digital electronic circuitry, or in computer software, firmware, or hardware, including the structures disclosed in this specification and their structural equivalents, or in combinations of one or more of them. The subject matter described in this specification can be implemented as one or more computer programs, e.g., one or more modules of computer program instructions, encoded on computer storage medium for execution by, or to control the operation of, data processing apparatus. The program instructions can be encoded on an artificially-generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. While a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices). The operations described in this specification can be implemented as operations performed by a data processing apparatus on data stored on one or more computer-readable storage devices or received from other sources.

For situations in which the systems discussed herein collect personal information about users, or may make use of personal information, the users may be provided with an opportunity to control whether programs or features that may collect personal information (e.g., information about a user's social network, social actions or activities, a user's preferences, or a user's location), or to control whether or how to receive content from a content server or other data processing system that may be more relevant to the user. In addition, certain data may be anonymized in one or more ways before it is stored or used, so that personally identifiable information is removed when generating parameters. For instance, a user's identity may be anonymized so that no personally identifiable information can be determined for the user, or a user's geographic location may be generalized where location information is obtained (such as to a city, postal code, or state level), so that a particular location of a user cannot be determined. Thus, the user may have control over how information is collected about him or her and used by the content server.

The term "data processing system" or "computing device" "module" "engine" "component" or "computing device" encompasses apparatuses, devices, and machines for processing data, including a programmable processor, a computer, a system on a chip, or multiple ones, or combinations, of the foregoing, amongst others. The apparatuses can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination thereof. The apparatus and execution environment can realize various different computing model infrastructures, such as web services, distributed computing and grid computing infrastructures. The content request module 130, the content rendering module 135, or the rendered content delivery module 140 can include or share one or more data processing apparatuses, systems, computing devices, or processors.

A computer program (also known as a program, software, software application, app, script, or code) can be written in any form of programming language, including compiled or interpreted languages, declarative or procedural languages, and can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs (e.g., components of the data processing system 110) to perform actions by operating on input data and generating output. The processes and logic flows can also be performed by, and apparatuses can also be implemented as, special purpose logic circuitry, e.g., an FPGA (field programmable gate array) or an ASIC (application-specific integrated circuit).

The subject matter described herein can be implemented in a computing system that includes a back-end component, e.g., as a data server, or that includes a middleware component, e.g., an application server, or that includes a front-end component, e.g., a client computer having a graphical user interface or a web browser through which a user can interact with an implementation of the subject matter described in this specification, or a combination of one or more such back-end, middleware, or front-end components. The components of the system can be interconnected by any form or medium of digital data communication, e.g., a communication network. Communication networks can include a local area network ("LAN") and a wide area network ("WAN"), an inter-network (e.g., the Internet), and peer-to-peer networks (e.g., ad hoc peer-to-peer networks), amongst others.

The computing system such as system 100 or system 600 can include clients and servers. A client and server are generally remote from each other and typically interact through a communication network (e.g., the network 105). The relationship of client and server arises by virtue of computer programs running on the respective computers and having a client-server relationship to each other. In some implementations, a server transmits data (e.g., an HTML page) to a client device (e.g., for purposes of displaying data to and receiving user input from a user interacting with the client device). Data generated at the client device (e.g., a result of the user interaction) can be received from the client device at the server (e.g., received by the data processing system 110 from the content provider computing device 115).

While operations are depicted in the drawings in a particular order, such operations are not required to be performed in the particular order shown or in sequential order, and all illustrated operations are not required to be performed. Actions described herein can be performed in a different order.

The separation of various system components does not require separation in all implementations, and the described program components can be included in a single hardware or software product. For instance, the content request module 130, the script provider module 135, and the content management module 134 can be a single module, a logic device having one or more processing circuits, or part of an online content item placement system.

Having now described some illustrative implementations, it is apparent that the foregoing is illustrative and not limiting. In particular, although many of the implementations presented herein involve specific combinations of method acts or system elements, those acts and those elements may be combined in other ways to accomplish the same objectives. Acts, elements and features discussed in connection with one implementation are not intended to be excluded from a similar role in other implementations or implementations.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular may also embrace implementations including a plurality of these elements, and any references in plural to any implementation or element or act herein may also embrace implementations including only a single element. References in the singular or plural form are not intended to limit the presently disclosed systems or methods, their components, acts, or elements to single or plural configurations. References to any act or element being based on any information, act or element may include implementations where the act or element is based at least in part on any information, act, or element.

Any implementation disclosed herein may be combined with any other implementation, and references to "an implementation," "some implementation," "an alternate implementation," "various implementation," "one implementation" or the like are not necessarily mutually exclusive and are intended to indicate that a particular feature, structure, or characteristic described in connection with the implementation may be included in at least one implementation. Such terms as used herein are not necessarily all referring to the same implementation. Any implementation may be combined with any other implementation, inclusively or exclusively, in any manner consistent with the aspects and implementations disclosed herein.

References to "or" may be construed as inclusive so that any terms described using "or" may indicate any of a single, more than one, and all of the described terms.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

The systems and methods described herein may be embodied in other specific forms without departing from the characteristics thereof. The foregoing implementations are illustrative rather than limiting of the described systems and methods. Scope of the systems and methods described herein is thus indicated by the appended claims, rather than the foregoing description, and changes that come within the meaning and range of the claims are embraced therein.

## Claims

1. A method for server-side rendering of native content for presentation within an environment of an application, comprising:
receiving, by a data processing system (110), from a client device (125, 420A-C, 470A-C), a request for content including: a content slot identifier identifying a particular content slot (320A-D) provided by a resource and size information of the requested content;
accessing, by the data processing system using the content slot identifier, a database (220) to identify a presentation schema (315A-B) used to arrange content components to generate rendered content files according to a specific configuration for display within an environment of the resource, wherein the presentation schema includes a plurality of style parameters, each of the style parameters including a value matching a value of the resource;
identifying, by the data processing system, responsive to the request for content, a content asset (410) including a plurality of content components;
rendering, by a content renderer (135) of the data processing system, as a rendered content file, the plurality of content components based on the presentation schema corresponding to the content slot (320A-D); and
transmitting, by the data processing system, the rendered content file to the client device for display within the content slot of the resource,
wherein the accessing the database (220) comprises using, by a content selection module (211) of the data processing system, a query to identify content assets in a content asset database (215) to retrieve a content asset matching the content slot identifier and the size information included in the request for content,
wherein the request for content is an adaptive-sized content request such that the returned rendered content file is configured to fit in variously-sized content slots, and
wherein the rendering, by the content renderer (135) of the data processing system, comprises rendering an adaptive content file such that the client device can adjust the adaptive content file by filling in 100% of a width of a content slot with the content file and then sizing a height of the content file to include values of the retrieved content asset.

2. The method of claim 1, wherein identifying the presentation schema (315A-B) comprises:
identifying, by the data processing system (110), a plurality of presentation schemas, each of the presentation schemas including a respective presentation schema identifier corresponding to the content slot identifier;
identifying, by the data processing system, a subset of the plurality of presentation schemas, each of the presentation schemas included in the subset including a size attribute matching the size value of the requested content; and
selecting, by the data processing system, the identified presentation schema from the subset of the plurality of presentation schemas.

3. The method of any preceding claim, wherein the rendered content file includes a script configured to transmit, responsive to an interaction with the rendered content file (470A-C) at the client device (125, 420A-C, 470A-C), an indication of the interaction with the rendered content file.

4. The method of claim 3, further comprising inserting, by the data processing system (110), into the rendered content file an address of a server to which the indication of the interaction is transmitted from the client device (125, 420A-C, 470A-C).

5. The method of any preceding claim, wherein the rendered content file includes a HyperText Markup Language (HTML) script configured to display the rendered content file at the client device.

6. The method of claim 5, wherein the rendered content file includes a Cascading Style Sheets (CSS) script configured to display the rendered content file at the client device (125, 420A-C, 470A-C).

7. The method of any preceding claim, wherein the style parameters include a section category to be displayed in the content slot, a background color of the content slot, a font size of text, a position of the text, or a position of an image.

8. The method of any preceding claim, wherein visual characteristics of the rendered content file match visual characteristics of the environment of the application.

9. A system (600) for server-side rendering of native content for presentation within an environment of an application, comprising:
a processor (620); and
a memory (625) coupled to the processor, the memory storing computer-executable instructions, which when executed by the processor, cause the processor to:
receive, from a client device (125, 420A-C, 470A-C), a request for content including: a content slot identifier identifying a particular content slot (320A-D) provided by a resource and size information of the requested content;
access, using the content slot identifier, a database to identify a presentation schema (315A-B) used to arrange content components to generate rendered content files according to a specific configuration for display within an environment of the resource, wherein the presentation schema includes a plurality of style parameters, each of the style parameters including a value matching a value of the resource, and wherein the accessing comprises using a query to identify content assets in a content asset database (215) to retrieve a content asset matching the content slot identifier and the size information included in the request for content;
identify, responsive to the request for content, a content asset (410) including a plurality of content components;
render, as a rendered content file, the plurality of content components based on the presentation schema corresponding to the content slot; and
transmit the rendered content file to the client device for display within the content slot of the resource
wherein the request for content is an adaptive-sized content request such that the returned rendered content file is configured to fit in variously-sized content slots, and
wherein the rendering comprises rendering an adaptive content file such that the client device can adjust the adaptive content file by filling in 100% of a width of a content slot with the content file and then sizing a height of the content file to include values of the retrieved content asset.

10. The system of claim 9, wherein in identifying the presentation schema (315A-B), the memory stores the computer-executable instructions, which when executed by the processor (620), further cause the processor to:
identify a plurality of presentation schemas, each of the presentation schemas including a respective presentation schema identifier corresponding to the content slot identifier;
identify a subset of the plurality of presentation schemas, each of the presentation schemas included in the subset including a size attribute matching the size value of the requested content; and
select the identified presentation schema from the subset of the plurality of presentation schemas.

11. The system of claim 9 or 10, wherein the rendered content file includes a script configured to transmit, responsive to an interaction with the rendered content file at the client device (125, 420A-C, 470A-C), an indication of the interaction with the rendered content file.

12. The system of claim 11, wherein the memory stores the computer-executable instructions, which when executed by the processor (620), further cause the processor to insert an address of a server to which the indication of the interaction is transmitted from the client device (125, 420A-C, 470A-C).

13. The system of any of claims 9 to 12, wherein the rendered content file includes a HyperText Markup Language (HTML) script configured to display the rendered content file at the client device (125, 420A-C, 470A-C) and optionally, wherein the rendered content file includes a Cascading Style Sheets (CSS) script configured to display the rendered content file at the client device (125, 420A-C, 470A-C).

14. The system of any of claims 9 to 13, wherein the style parameters include a section category to be displayed in the content slot, a background color of the content slot, a font size of text, a position of the text, or a position of an image.

15. The system of any of claims 9 to 14, wherein visual characteristics of the rendered content file match visual characteristics of the environment of the application.

## Patentansprüche

1. Verfahren für serverseitiges Rendern von nativem Inhalt zur Präsentation innerhalb einer Umgebung einer Anwendung, umfassend:
Empfangen, durch ein Datenverarbeitungssystem (110), von einer Client-Vorrichtung (125, 420A-C, 470A-C), einer Anforderung nach Inhalten, die Folgendes beinhaltet: eine Inhaltsschlitz-Kennung, die einen bestimmten Inhaltsschlitz (320A-D) identifiziert, der durch eine Ressource bereitgestellt wird, und Größeninformationen des angeforderten Inhalts;
Zugreifen, durch das Datenverarbeitungssystem unter Verwendung der Inhaltsschlitz-Kennung, auf eine Datenbank (220), um ein Präsentationsschema (315A-B) zu identifizieren, das verwendet wird, um Inhaltskomponenten anzuordnen, um gerenderte Inhaltsdateien gemäß einer spezifischen Konfiguration zur Anzeige innerhalb einer Umgebung der Ressource zu erzeugen, wobei das Präsentationsschema eine Vielzahl von Stilparametern enthält, wobei jeder der Stilparameter einen Wert beinhaltet, der mit einem Wert der Ressource übereinstimmt;
Identifizieren, durch das Datenverarbeitungssystem, als Reaktion auf die Anforderung nach Inhalten, eines Inhaltsbestandteils (410), der eine Vielzahl von Inhaltskomponenten beinhaltet;
Rendern, durch einen Inhaltsrenderer (135) des Datenverarbeitungssystems, als eine gerenderte Inhaltsdatei, der Vielzahl von Inhaltskomponenten basierend auf dem Präsentationsschema, das dem Inhaltsschlitz (320A-D) entspricht; und
Übertragen, durch das Datenverarbeitungssystem, der gerenderten Inhaltsdatei an die Client-Vorrichtung zur Anzeige innerhalb des Inhaltsschlitzes der Ressource,
wobei das Zugreifen auf die Datenbank (220) ein Verwenden, durch ein Inhaltsauswahlmodul (211) des Datenverarbeitungssystems, einer Abfrage zum Identifizieren von Inhaltsbestandteilen in einer Inhaltsbestandteildatenbank (215) umfasst, um einen Inhaltsbestandteil abzurufen, der der Inhaltsschlitz-Kennung und den in der Anforderung nach Inhalt enthaltenen Größeninformationen übereinstimmt,
wobei die Anforderung nach Inhalten eine Anforderung nach Inhalten adaptiver Größe ist, sodass die zurückgegebene gerenderte Inhaltsdatei konfiguriert ist, um in unterschiedlich große Inhaltsschlitze zu passen, und
wobei das Rendern, durch den Inhaltsrenderer (135) des Datenverarbeitungssystems, ein Rendern einer adaptiven Inhaltsdatei umfasst, sodass die Client-Vorrichtung die adaptive Inhaltsdatei anpassen kann, indem sie 100 % einer Breite eines Inhaltsschlitzes mit der Inhaltsdatei ausfüllt und dann eine Höhe der Inhaltsdatei skaliert, um Werte des abgerufenen Inhaltsbestandteils zu beinhalten.

2. Verfahren nach Anspruch 1, wobei das Identifizieren des Präsentationsschemas (315A-B) Folgendes umfasst:
Identifizieren, durch das Datenverarbeitungssystem (110), einer Vielzahl von Präsentationsschemata, wobei jedes der Präsentationsschemata eine jeweilige Präsentationsschema-Kennung beinhaltet, die der Inhaltsschlitz-Kennung entspricht;
Identifizieren, durch das Datenverarbeitungssystem, einer Teilmenge der Vielzahl von Präsentationsschemata, wobei jedes der in der Teilmenge beinhalteten Präsentationsschemata ein Größenattribut beinhaltet, das mit dem Größenwert des angeforderten Inhalts übereinstimmt; und
Auswählen, durch das Datenverarbeitungssystem, des identifizierten Präsentationsschemas aus der Teilmenge der Vielzahl von Präsentationsschemata.

3. Verfahren nach einem vorherigen Anspruch, wobei die gerenderte Inhaltsdatei ein Skript beinhaltet, das konfiguriert ist, um als Reaktion auf eine Interaktion mit der gerenderten Inhaltsdatei (470A-C) an der Client-Vorrichtung (125, 420A-C, 470A-C) eine Angabe der Interaktion mit der gerenderten Inhaltsdatei zu übertragen.

4. Verfahren nach Anspruch 3, ferner umfassend ein Einfügen, durch das Datenverarbeitungssystem (110), in die gerenderte Inhaltsdatei, einer Adresse eines Servers, an den die Anzeige der Interaktion von der Client-Vorrichtung (125, 420A-C, 470A-C) übertragen wird.

5. Verfahren nach einem vorherigen Anspruch, wobei die gerenderte Inhaltsdatei ein Skript in HyperText Markup Language (HTML) beinhaltet, das konfiguriert ist, um die gerenderte Inhaltsdatei auf der Client-Vorrichtung anzuzeigen.

6. Verfahren nach Anspruch 5, wobei die gerenderte Inhaltsdatei ein Skript in Cascading Style Sheets (CSS) beinhaltet, das konfiguriert ist, um die gerenderte Inhaltsdatei auf der Client-Vorrichtung (125, 420A-C, 470A-C) anzuzeigen.

7. Verfahren nach einem vorherigen Anspruch, wobei die Stilparameter eine im Inhaltsschlitz anzuzeigende Abschnittskategorie, eine Hintergrundfarbe des Inhaltsschlitzes, eine Schriftgröße des Textes, eine Position des Textes oder eine Position eines Bilds beinhalten.

8. Verfahren nach einem vorherigen Anspruch, wobei die visuellen Eigenschaften der gerenderten Inhaltsdatei mit visuellen Eigenschaften der Umgebung der Anwendung übereinstimmen.

9. System (600) für serverseitiges Rendern von nativem Inhalt zur Präsentation innerhalb einer Umgebung einer Anwendung, umfassend:
einen Prozessor (620); und
einen Speicher (625), der mit dem Prozessor gekoppelt ist, wobei der Speicher computerausführbare Anweisungen speichert, die, wenn sie von dem Prozessor ausgeführt werden, den Prozessor zu Folgendem veranlassen:
Empfangen, von einer Client-Vorrichtung (125, 420A-C, 470A-C), einer Anforderung nach Inhalten, die Folgendes beinhaltet: eine Inhaltsschlitz-Kennung, die einen bestimmten Inhaltsschlitz (320A-D) identifiziert, der durch eine Ressource bereitgestellt wird, und Größeninformationen des angeforderten Inhalts;
Zugreifen, unter Verwendung der Inhaltsschlitz-Kennung, auf eine Datenbank , um ein Präsentationsschema (315A-B) zu identifizieren, das verwendet wird, um Inhaltskomponenten anzuordnen, um gerenderte Inhaltsdateien gemäß einer spezifischen Konfiguration zur Anzeige innerhalb einer Umgebung der Ressource zu erzeugen, wobei das Präsentationsschema eine Vielzahl von Stilparametern beinhaltet, wobei jeder der Stilparameter einen Wert beinhaltet, der mit einem Wert der Ressource übereinstimmt, und wobei das Zugreifen ein Verwenden einer Abfrage zum Identifizieren von Inhaltsbestandteilen in einer Inhaltsbestandteildatenbank (215) umfasst, um einen Inhaltsbestandteil abzurufen, der mit der Inhaltsschlitz-Kennung und den in der Anforderung nach Inhalt beinhalteten Größeninformationen übereinstimmt;
Identifizieren, als Reaktion auf die Anforderung nach Inhalten eines Inhaltsbestandteils (410), der eine Vielzahl von Inhaltskomponenten beinhaltet;
Rendern, als gerenderte Inhaltsdatei, der Vielzahl von Inhaltskomponenten basierend auf dem Präsentationsschema, das dem Inhaltsschlitz entspricht; und
Übertragen der gerenderten Inhaltsdatei an die Client-Vorrichtung zur Anzeige innerhalb des Inhaltsschlitzes der Ressource
wobei die Anforderung nach Inhalten eine Anforderung nach Inhalten adaptiver Größe ist, sodass die zurückgegebene gerenderte Inhaltsdatei konfiguriert ist, um in unterschiedlich große Inhaltsschlitze zu passen, und
wobei das Rendern ein Rendern einer adaptiven Inhaltsdatei umfasst, sodass die Client-Vorrichtung die adaptive Inhaltsdatei anpassen kann, indem sie 100 % einer Breite eines Inhaltsschlitzes mit der Inhaltsdatei ausfüllt und dann eine Höhe der Inhaltsdatei skaliert, um Werte des abgerufenen Inhaltsbestandteils zu beinhalten.

10. System nach Anspruch 9, wobei der Speicher beim Identifizieren des Präsentationsschemas (315A-B) die computerausführbaren Anweisungen speichert, die, wenn sie von dem Prozessor (620) ausgeführt werden, den Prozessor ferner zu Folgendem veranlassen:
Identifizieren einer Vielzahl von Präsentationsschemata, wobei jedes der Präsentationsschemata eine jeweilige Präsentationsschema-Kennung beinhaltet, die der Inhaltsschlitz-Kennung entspricht;
Identifizieren einer Teilmenge der Vielzahl von Präsentationsschemata, wobei jedes der in der Teilmenge beinhalteten Präsentationsschemata ein Größenattribut beinhaltet, das mit dem Größenwert des angeforderten Inhalts übereinstimmt; und
Auswählen des identifizierten Präsentationsschemas aus der Teilmenge der Vielzahl von Präsentationsschemata.

11. System nach Anspruch 9 oder 10, wobei die gerenderte Inhaltsdatei ein Skript beinhaltet, das konfiguriert ist, um als Reaktion auf eine Interaktion mit der gerenderten Inhaltsdatei an der Client-Vorrichtung (125, 420A-C, 470A-C) eine Angabe der Interaktion mit der gerenderten Inhaltsdatei zu übertragen.

12. System nach Anspruch 11, wobei der Speicher die computerausführbaren Befehle speichert, die, wenn sie von dem Prozessor (620) ausgeführt werden, den Prozessor ferner veranlassen, eine Adresse eines Servers einzufügen, an den die Anzeige der Interaktion von der Client-Vorrichtung (125, 420A-C, 470A-C) übertragen wird.

13. System nach einem der Ansprüche 9 bis 12, wobei die gerenderte Inhaltsdatei ein Skript in HyperText Markup Language (HTML) beinhaltet, das konfiguriert ist, um die gerenderte Inhaltsdatei auf der Client-Vorrichtung (125, 420A-C, 470A-C) anzuzeigen, und optional, wobei die gerenderte Inhaltsdatei ein Skript in Cascading Style Sheets (CSS) beinhaltet, das konfiguriert ist, um die gerenderte Inhaltsdatei auf der Client-Vorrichtung (125, 420A-C, 470A-C) anzuzeigen.

14. System nach einem der Ansprüche 9 bis 13, wobei die Stilparameter eine im Inhaltsschlitz anzuzeigende Abschnittskategorie, eine Hintergrundfarbe des Inhaltsschlitzes, eine Schriftgröße des Textes, eine Position des Textes oder eine Position eines Bilds beinhalten.

15. System nach einem der Ansprüche 9 bis 14, wobei visuelle Eigenschaften der gerenderten Inhaltsdatei mit visuellen Eigenschaften der Umgebung der Anwendung übereinstimmen.

## Revendications

1. Procédé de rendu côté serveur d'un contenu natif pour une présentation dans un environnement d'une application, comprenant :
la réception, par un système de traitement de données (110), à partir d'un dispositif client (125, 420A-C, 470A-C), d'une demande de contenu comprenant un identifiant d'emplacement de contenu identifiant un emplacement de contenu particulier (320A-D) fourni par une information de ressource et de taille du contenu demandé ;
l'accès, par le système de traitement de données à l'aide de l'identifiant d'emplacement de contenu, à une base de données (220) pour identifier un schéma de présentation (315A-B) utilisé pour organiser des composants de contenu afin de générer des fichiers de contenu rendus selon une configuration spécifique pour l'affichage dans un environnement de la ressource, dans lequel le schéma de présentation comprend une pluralité de paramètres de style, chacun des paramètres de style comprenant une valeur correspondant à une valeur de la ressource ;
l'identification, par le système de traitement de données, en réponse à la demande de contenu, d'un actif de contenu (410) comprenant une pluralité de composants de contenu ;
le rendu, par un moteur de rendu de contenu (135) du système de traitement de données, sous la forme d'un fichier de contenu rendu, de la pluralité de composants de contenu sur la base du schéma de présentation correspondant à l'emplacement de contenu (320A-D) ; et
la transmission, par le système de traitement de données, du fichier de contenu rendu au dispositif client pour l'affichage dans l'emplacement de contenu de la ressource,
dans lequel l'accès à la base de données (220) comprend l'utilisation, par un module de sélection de contenu (211) du système de traitement de données, d'une requête pour identifier des actifs de contenu dans une base de données d'actifs de contenu (215) pour récupérer un actif de contenu correspondant à l'identifiant d'emplacement de contenu et aux informations de taille incluses dans la demande de contenu,
dans lequel la demande de contenu est une demande de contenu de taille adaptative de telle sorte que le fichier de contenu rendu renvoyé soit configuré pour s'adapter à des emplacements de contenu de différentes tailles, et
dans lequel le rendu, par le moteur de rendu de contenu (135) du système de traitement de données, comprend le rendu d'un fichier de contenu adaptatif de telle sorte que le dispositif client puisse ajuster le fichier de contenu adaptatif en remplissant 100 % d'une largeur d'un emplacement de contenu avec le fichier de contenu puis dimensionner une hauteur du fichier de contenu pour inclure des valeurs de l'actif de contenu récupéré.

2. Procédé selon la revendication 1, dans lequel l'identification du schéma de présentation (315A-B) comprend :
l'identification, par le système de traitement de données (110), d'une pluralité de schémas de présentation, chacun des schémas de présentation comprenant un identifiant de schéma de présentation respectif correspondant à l'identifiant d'emplacement de contenu ;
l'identification, par le système de traitement de données, d'un sous-ensemble de la pluralité de schémas de présentation, chacun des schémas de présentation inclus dans le sous-ensemble comprenant un attribut de taille correspondant à la valeur de taille du contenu demandé ; et
la sélection, par le système de traitement de données, du schéma de présentation identifié dans le sous-ensemble de la pluralité de schémas de présentation.

3. Procédé selon une quelconque des revendications précédentes, dans lequel le fichier de contenu rendu comprend un script configuré pour transmettre, en réponse à une interaction avec le fichier de contenu rendu (470A-C) au niveau du dispositif client (125, 420A-C, 470A-C), une indication de l'interaction avec le fichier de contenu rendu.

4. Procédé selon la revendication 3, comprenant en outre l'insertion, par le système de traitement de données (110), dans le fichier de contenu rendu d'une adresse d'un serveur auquel l'indication de l'interaction est transmise depuis le dispositif client (125, 420A-C, 470A-C).

5. Procédé selon une quelconque des revendications précédentes, dans lequel le fichier de contenu rendu comprend un script de langage de balisage hypertexte (HTML) configuré pour afficher le fichier de contenu rendu sur le dispositif client.

6. Procédé selon la revendication 5, dans lequel le fichier de contenu rendu comprend un script de feuilles de style en cascade (CSS) configuré pour afficher le fichier de contenu rendu sur le dispositif client (125, 420A-C, 470A-C).

7. Procédé selon une quelconque des revendications précédentes, dans lequel les paramètres de style incluent une catégorie de section à afficher dans l'emplacement de contenu, une couleur d'arrière-plan de l'emplacement de contenu, une taille de police de texte, une position du texte ou une position d'une image.

8. Procédé selon une quelconque des revendications précédentes, dans lequel les caractéristiques visuelles du fichier de contenu rendu correspondent aux caractéristiques visuelles de l'environnement de l'application.

9. Système (600) pour le rendu côté serveur d'un contenu natif pour une présentation dans un environnement d'une application, comprenant :
un processeur (620) ; et
une mémoire (625) couplée au processeur, la mémoire mémorisant des instructions exécutables par ordinateur qui, lorsqu'elles sont exécutées par le processeur, amènent le processeur à :
recevoir, d'un dispositif client (125, 420A-C, 470A-C), une demande de contenu comprenant : un identifiant d'emplacement de contenu identifiant un emplacement de contenu particulier (320A-D) fourni par une information de ressource et de taille du contenu demandé ;
accéder, à l'aide de l'identifiant d'emplacement de contenu, à une base de données pour identifier un schéma de présentation (315A-B) utilisé pour organiser des composants de contenu afin de générer des fichiers de contenu rendus selon une configuration spécifique pour l'affichage dans un environnement de la ressource, dans lequel le schéma de présentation comprend un pluralité de paramètres de style, chacun des paramètres de style comprenant une valeur correspondant à une valeur de la ressource, et dans lequel l'accès comprend l'utilisation d'une requête pour identifier des actifs de contenu dans une base de données d'actifs de contenu (215) pour récupérer un actif de contenu correspondant à l'identifiant d'emplacement de contenu et les informations de taille incluses dans la demande de contenu ;
identifier, en réponse à la demande de contenu, un actif de contenu (410) comprenant une pluralité de composants de contenu ;
rendre, en tant que fichier de contenu rendu, la pluralité de composants de contenu sur la base du schéma de présentation correspondant à l'emplacement de contenu ; et
transmettre le fichier de contenu rendu au dispositif client pour l'affichage dans l'emplacement de contenu de la ressource
dans lequel la demande de contenu est une demande de contenu de taille adaptative de telle sorte que le fichier de contenu rendu renvoyé soit configuré pour s'adapter à des emplacements de contenu de différentes tailles, et
dans lequel le rendu comprend le rendu d'un fichier de contenu adaptatif de telle sorte que le dispositif client puisse ajuster le fichier de contenu adaptatif en remplissant 100 % d'une largeur d'un emplacement de contenu avec le fichier de contenu, puis en dimensionnant une hauteur du fichier de contenu pour inclure les valeurs de l'élément de contenu récupéré.

10. Système selon la revendication 9, dans lequel lors de l'identification du schéma de présentation (315A-B), la mémoire mémorise les instructions exécutables par ordinateur qui, lorsqu'elles sont exécutées par le processeur (620), amènent en outre le processeur à :
identifier une pluralité de schémas de présentation, chacun des schémas de présentation comprenant un identifiant de schéma de présentation respectif correspondant à l'identifiant d'emplacement de contenu ;
identifier un sous-ensemble de la pluralité de schémas de présentation, chacun des schémas de présentation inclus dans le sous-ensemble comprenant un attribut de taille correspondant à la valeur de taille du contenu demandé ; et
sélectionner le schéma de présentation identifié dans le sous-ensemble de la pluralité de schémas de présentation.

11. Système selon la revendication 9 ou 10, dans lequel le fichier de contenu rendu comprend un script configuré pour transmettre, en réponse à une interaction avec le fichier de contenu rendu au niveau du dispositif client (125, 420A-C, 470A-C), une indication de l'interaction avec le fichier de contenu rendu.

12. Système selon la revendication 11, dans lequel la mémoire mémorise les instructions exécutables par ordinateur qui, lorsqu'elles sont exécutées par le processeur (620), amènent en outre le processeur à insérer une adresse d'un serveur auquel l'indication de l'interaction est transmise depuis le dispositif client (125, 420A-C, 470A-C).

13. Système selon une quelconque des revendications 9 à 12, dans lequel le fichier de contenu rendu comprend un script de langage de balisage hypertexte (HTML) configuré pour afficher le fichier de contenu rendu sur le dispositif client (125, 420A-C, 470A-C) et optionnellement, dans lequel le fichier de contenu rendu comprend un script de feuilles de style en cascade (CSS) configuré pour afficher le fichier de contenu rendu sur le dispositif client (125, 420A-C, 470A-C).

14. Système selon une quelconque des revendications 9 à 13, dans lequel les paramètres de style comprennent une catégorie de section à afficher dans l'emplacement de contenu, une couleur d'arrière-plan de l'emplacement de contenu, une taille de police de texte, une position du texte ou une position d'une image.

15. Système selon une quelconque des revendications 9 à 14, dans lequel les caractéristiques visuelles du fichier de contenu rendu correspondent aux caractéristiques visuelles de l'environnement de l'application.
